# EUROPÄISCHE PATENTSCHRIFT

(11) **EP 1 506 078 B1**
(45) Veröffentlichungstag und Bekanntmachung des Hinweises auf die Patenterteilung: **29.03.2006**
(21) Anmeldenummer: 03725150.1
(22) Anmeldetag: 06.05.2003
(51) Int. Cl.: B29C 45/46

(54) **DOSIERUNGSVORRICHTUNG FÜR EINE SPRITZGIESSEINHEIT**
DOSING DEVICE FOR AN INJECTION MOLDING UNIT
DISPOSITIF DE DOSAGE POUR UNITE DE MOULAGE PAR INJECTION

(30) Priorität: 15.05.2002 DE 10221535
(43) Veröffentlichungstag der Anmeldung: 16.02.2005
(73) Patentinhaber: Krauss-Maffei Kunststofftechnik GmbH, 80997 München (DE)
(72) Erfinder: EICHLSEDER, Martin, 94167 Tettenweis (DE)
(86) Internationale Anmeldenummer: PCT/EP2003/004687
(87) Internationale Veröffentlichungsnummer: WO 2003/097325

(56) Entgegenhaltungen:
- CH-A- 461 789
- US-A- 3 390 433

## Beschreibung

Die Erfindung betrifft eine Dosiervorrichtung für eine Spritzgießeinheit nach Patentanspruch 1.
Beim Spritzgießen von Kunststoffen ist es immer erforderlich, daß die pro Zyklus (Schuß) in die Kavität eines Formwerkzeugs eingespritzte Kunststoffmenge (Schußmenge) möglichst exakt bemessen ist und über eine Vielzahl von Schüssen reproduzierbar gleich bleibt. Dies gilt insbesondere für Datenkarten wie Bankkarten oder sog. "Smart-Cards" oder auch Datenträger wie CDs, DVDs, etc., da bei diesen Artikeln sehr enge Toleranzen eingehalten werden müssen. Verstärkt tritt diese Problematik beim sog. Spritzprägen mit Mehrfach-Kavitätenwerkzeug auf, wobei Kunststoffinaterial in eine entsprechend einem Präghub vergrößerte Kavität eingespritzt wird und anschließend geprägt wird. Dabei muß vor dem Prägen bereits die exakte Schußmenge in jeder Kavität sein, da die Kavitäten beim Prägevorgang den Anspritzkanal verschließen, wodurch eine anschließende Angußabtrennung entfällt.

Andererseits variieren die Schußmengen aufgrund von thermischen Gleichgewichtsstörungen wie Temperaturregelstellen, unterschiedlichen Fließwiderständen im Heißkanalverteiler verschiedener Kavitäten aufgrund von Fertigungstoleranzen oder anderen Ungenauigkeiten im System. Da bei Einspritzschnecken der Einspritzvorgang durch die mechanischen Eigenschaften von Rückstromsperren und dergleichen beeinflußt wird, ist deren Schußmengengenauigkeit häufig nicht ausreichend

Im Bereich des Spritzgießens werden Dosiervorrichtungen mit Vor- und Dosierkammern eingesetzt, um die Schußmengengenauigkeit zu verbessern, wie z.B. in der US3390433 und der FR142851 offenbart. Die FR142851 zeigt eine Dosiervorrichtung für das Spritzgießen, bei der die Vor- und Dosierkammer Ober einen absperrbaren Verbindungskanal verbunden und durch einen Kolben getrennt sind. Der Oberbegriff des Anspruchs 1 geht von diesem Dokument aus. Für das dosierte Austragen von Kleb- und Dichtungsstoffen ist durch die US3160331 eine Dosiervorrichtung bekannt, bei der die Vor- und Dosierkammer über einen absperrbaren Verbindungskanal verbunden und durch einen Kolben mit unterschiedlichen Kolbenflächen voneinander getrennt sind.

Die Erfindung betrifft eine Dosiervorrichtung für das Spritzgießen, mit der die Einspritzmenge des Kunststoffs für jeden Schuß exakt vor dem Einspritzen bemessen wird

Eine erfindungsgemäße Dosiervorrichtung umfaßt die Merkmale des Patentanspruchs 1; die abhängigen Ansprüche betreffen vorteilhafte Weiterentwicklungen der Erfindung.

Die Dosiervorrichtung umfaßt eine Dosierkammer und eine Vorkammer, die über einen absperrbaren Verbindungskanal miteinander verbunden sind und durch ein bewegbares Verdrängungselement voneinander getrennt sind. Vor jedem Einspritzzyklus wird Kunststoffmaterial von der Vorkammer über den Verbindungskanal in die Dosierkammer eingeleitet, wobei das Verdrängungselement in eine vorgegebene Position bewegt wird, die das exakte Volumen der Dosierkammer bestimmt. Anschließend wird der Verbindungskanal gesperrt, und über einen Eingußkanal wird plastifiziertes Kunststoffmaterial in die Vorkammer eingeleitet. Dadurch bewegt sich das Verdrängungselement in eine zweite vorgegebene Position und verdrängt dadurch ein exakt vorgegebenes Volumen aus der Dosierkammer in einen Anspritzkanal.

Durch den mechanischen Aufbau bedingt ist das Einspritzvolumen immer gleich und kann mit Nachdruck unter Druck eingesperrt werden und ist dadurch von Schuß zu Schuß gleich vorgespannt bzw. komprimiert, was sich wiederum auf die Schußgenauigkeit positiv auswirkt.

Das Verdrängungselement ist ein Kolben, bei dem die Kolbenfläche, die die Vorkammer begrenzt, kleiner ist als die Kolbenfläche, die die Dosierkammer begrenzt. Bei dieser Ausgestaltung erfolgt nicht nur die Bewegung in Spritzrichtung über den Spritzdruck einer Einspritzeinheit. Die Bewegung des Kolbens in der entgegengesetzten Richtung (Dosierrichtung) erfolgt durch die unterschiedlichen Flächenverhältnisse und einem anstehenden Nach- oder Staudruck bei geöffnetem Verbindungskanal, wobei beide Bewegungen in beide Richtungen begrenzt sind.

Vorzugsweise erfolgt das Öffnen bzw. Schließen des Verbindungskanals und des Anspritzkanals über eine Verschlußvorrichtung, wobei in einer Stellung (Dosierstellung) der Verschlußvorrichtung der Verbindungskanal geöffnet ist und der Anspritzkanal geschlossen, in einer zweiten Stellung (Einspritzstellung) der Verbiridungskanal geschlossen und der Anspritzkanal offen ist. Die Verschlußvorrichtung kann auch so ausgestaltet sein, daß in einer Zwischenstellung (Nachdruckstellung) der Verschlußvorrichtung beide Kanäle geöffnet sind.

Vorzugsweise ist ein verstellbarer Anschlag für das Verdrängungselement vorgesehen, so daß das Volumen der Dosierkammer den Erfordernissen entsprechend angepaßt werden kann.

Mit der erfindungsgemäßen Dosiervorrichtung lassen sich eine hohe Artikelgenauigkeit bei gleichzeitiger Einhaltung sehr enger Artikeltoleranzen gewährleisten. Dabei verhält sich ein Mehrkavitätenwerkzeug ähnlichen einem Einkavitätenwerkzeug. Die Dosiervorrichtung kann als Werkzeugverschlußdüse als Ersatz für eine Heißkanaldüse oder als Maschinenverschlußdüse für genaues Schußgewicht eingesetzt werden.

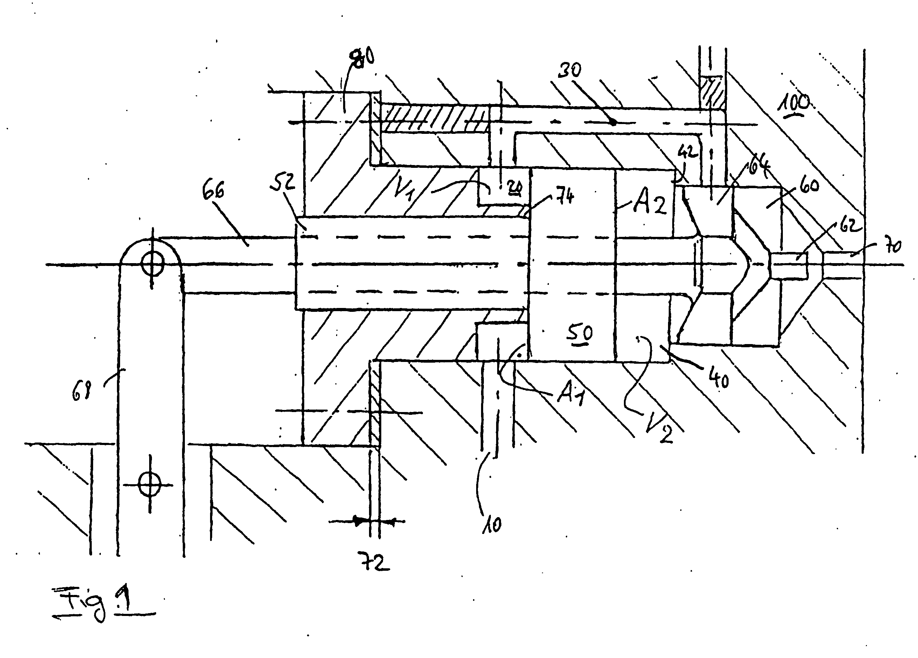

Eine Ausführungsform der Erfindung wird anhand der beigefügten Zeichnung erläutert, die schematisch eine teilweise weggebrochene Seitenansicht an der Dosiervorrichtung zeigt.

In einem Grundkörper 100 ist ein Eingußkanal 10 vorgesehen, der als Heißkanal ausgebildet ist und mit einer Spritzgießeinheit, d.h. einer Einspritzschneckeneinheit oder einem Einspritzzylinder verbunden ist. Der Eingußkanal 10 mündet in eine kreisringförmige Vorkammer 20, die ihrerseits über einen Überströmkanal 30 mit einer Dosierkammer 40 verbunden ist. Die Dosierkammer 40 steht mit einem Anspritzkanal 70 in Verbindung, der seinerseits in eine Werkzeugkavität 90 mündet.

Zwischen der Vorkammer 20 und der Dosierkammer 40 ist ein verschiebbares Verdrängungselement 50 in Form eines kreisringförmigen Kolbens vorgesehen. Das Verdrängungselement 50 ist zwischen einer ersten Position, in der es an einem Anschlag 74 anliegt, und einer zweiten Position verschiebbar, in der es an einem zweiten Anschlag 42 anliegt. Der Anschlag 74 ist Teil eines Dosierhub-Einstellungskolbens 80, dessen Position zur Einstellung des Dosierhubs veränderbar ist, wie durch die Pfeile 72 dargestellt ist.

Des weiteren umfaßt die Dosiervorrichtung eine Verschlußvorrichtung 60, die sich ausgehend von einem Betätigungselement 68 als Schaft 66 durch die Längsachse der Dosiervorrichtung bis in die Dosierkammer und den Anspritzkanal 70 erstreckt. An diesem Ende trägt sie einen Verschlußkopf mit einer Sperrfläche 64 zum Verschließen des Überströmkanals 30 sowie einer Sperrnadel 62 zum Verschließen des Anspritzkanals 70.

Die Fläche A, des Kolbens, die die Vorkammer 20 begrenzt, ist kleiner als die Fläche A₂, die die Dosierkammer 40 begrenzt. Des weiteren ist der Kolben 50 mit einer Kolbenstange 52 verbunden, die im Bereich der Vorkammer 20 einen größeren Durchmesser als der Schaft 66 der Verschlußvorrichtung aufweist. Dadurch wird sichergestellt, daß auch in Zwischenpositionen die Fläche A, kleiner ist als die Fläche A₂.

In der Darstellung befindet sich die Verschlußvorrichtung in der Einspritzposition, in der der Überströmkanal 30 verschlossen ist und der Anspritzkanal 70 geöffnet. Dabei liegt das Verdrängungselement am Anschlag 74 an, und die Dosierkammer 40 ist vollständig mit Kunststoffmaterial gefüllt. In dieser Situation wird Kunststoffmaterial über den Eingußkanal 10 von der Spritzgießeinheit zugeführt. Wegen des verschlossenen Überströmkanals 30 wirkt der Spritzdruck auf die kleinere Kolbenfläche A, und schiebt das Verdrängungselement gegen den Anschlag 42, wodurch das genau vor dem Verdrängungselement befindliche Volumen V₂ eingespritzt wird. Anschließend wird die Verschlußvorrichtung in die Dosierstellung gebracht, in der der Nadelverschluß zunächst den Anspritzkanal 70 verschließt und kurz danach den Überströmkanal 30 öffnet. Gleichzeitig wird beispielsweise ein Prägevorgang durchgeführt.

In der Dosierstellung kommunizieren die Vorkammer 20 und die Dosierkammer 40 miteinander, wobei in beiden Kammern der gleiche Druck, Nach- oder Staudruck, herrscht.

Wegen der unterschiedlichen Flächen A₁, A₂ wirkt eine resultierende Kraft, die das Verdrängungselement 50 zum Anschlag 74 verschiebt, bis die Dosierkammer 40 vollständig gefüllt ist. Dabei fährt das Werkzeug (nicht dargestellt) in eine Prägeposition, der Nadelverschluß öffnet, wobei zunächst der Überströmkanal 30 verschlossen wird und dann der Anspritzkanal 70 freigegeben wird, und ein neuer Zyklus beginnt.

Durch Einsatz der erfindungsgemäßen Dosiervorrichtung ergibt sich ein schonender Betrieb eines Mehrfach-Formwerkzeugs, da eine Überspritzung der Kavität durch die vorgegebene Spritzmenge pro Kavität nicht möglich ist, auch wenn eine Kavität von einem Mehrfachwerkzeug eingefroren ist. Da schon geringe Flächenunterschiede zwischen den Flächen A₁ und A₂ ausreichend sind, ergeben sich geringe Belastungen des Verdrängungselementes 50 und daraus resultierend geringe Leckagen.

Die Dosiervorrichtung kann sehr nah an der Werkzeugkavität angeordnet werden, so daß nur ein geringer Einfluß von Massekomprimierung zwischen Dosiervorrichtung und Formnest auftritt, und der Einsatz der Dosiervorrichtung ist ohne größere Modifikationen von Spritzgießmaschinen möglich, so daß der Funktionsablauf identisch ist zu einer Werkzeugverschlußdüse.

Grundsätzlich ist es auch möglich, den Überstromkanal getrennt von dem Nadelverschluß zu sperren, so daß bei Bedarf über den Überströmkanal ein Nachdruck erzeugt werden kann. Da die Bemessung der Einspritzmenge durch die Dosiervorrichtung erfolgt, kann bei Einspritzschnecken auf eine Rückstromsperre in der Plastifizierung in den meisten Fällen verzichtet werden, so daß die damit verbundenen Probleme wie Verschleiß, Schußgewichtsschwankungen und dergleichen entfallen.

Grundsätzlich wird das Schußgewicht pro Kavität durch den Dosierhub-Einstellkolben 80 eingestellt, so daß sehr unterschiedliche Einspritzmengen einstellbar sind.

Wird die Dosiervorrichtung im Werkzeug als Verschlußdüse eingesetzt, ist nur eine einmalige Schußgewichtseinstellung pro Kavität notwendig, da das Artikelgewicht durch die Werkzeugkavität feststeht.

Des weiteren ist es beispielsweise möglich, mit einer Einspritzschnecke oder einem Einspritzzylinder einen großen Dosierhub aufzuplastifizieren, der dann für mehrere Zyklen verwendet wird.

Wird die Dosiervorrichtung in dem Formwerkzeug als eine Verschlußdüse eingesetzt, kann auf Seiten der Vorkammer 20 bereits vor dem Öffnen der Verschlußnadel ein hoher Spritzdruck anliegen. Wird die Verschlußnadel anschließend geöffnet, erfolgt ein schlagartiges Einspritzen, da der anstehende Spritzdruck wie ein Speicher wirkt. Somit entfallen zu Beginn des Spritzens die Widerstandsverluste durch den Eingußkanal bis zur Dosiervorrichtung. Durch das schlagartige Einspritzen können sehr kurze Einspritzzeiten erreicht werden. Zusätzlich können durch das schlagartige Einspritzen noch verfahrenstechnische Vorteile entstehen.

Wie eingangs erläutert, ist die erfindungsgemäße Dosiervorrichtung insbesondere auch für den Einsatz bei Werkzeugen mit mehreren Kavitäten geeignet. Bei derartigen Werkzeugen verzweigt sich der Einspritzkanal, in den die Plastifiziervorrichtung einspritzt, in mehrere Einspritzkanäle, die jeweils in eine Werkzeugkavität münden. Vorzugsweise ist in jedem verzweigten Einspritzkanal stromab der Verzweigung eine Dosiervorrichtung vorgesehen, so daß jede Werkzeugkavität eine eigene Dosiervorrichtung aufweist. Dabei ist die Dosiervorrichtung vorzugsweise nahe der Werkzeugkavität angeordnet, so daß der Anspritzkanal 70 in die Werkzeugkavität 90 mündet.

Auch bei Werkzeugen mit nur einer Kavität ist die Dosiervorrichtung vorzugsweise in der Nähe der Kavität angeordnet. Andererseits ist es jedoch auch möglich, die Dosiervorrichtung an einer gewünschten Stelle zwischen der Plastifiziervorrichtung und der Werkzeugkavität anzuordnen.

## Patentansprüche

1. Dosiervorrichtung für eine Spritzgießeinheit mit einer Vorkammer (20), die mit einem Eingußkanal (10) verbunden ist, und einer Dosierkammer (40), die mit einem Anspritzkanal (70) verbunden ist, wobei die Vorkammer (20) und die Dosierkammer (40) über einen absperrbaren Verbindungskanal (30) miteinander verbunden sind, wobei
zwischen der Vorkammer (20) und der Dosierkammer (40) ein verschiebbares und die beiden Kammern voneinander trennendes Verdrängungselement (50) in Form eines Kolbens vorgesehen ist **dadurch gekennzeichnet, dass** die Kolbenfläche (A1), die die VorKammer (20) begrenzt, kleiner ist als die Kolbenfläche (A2), die die Dosierkammer (40) begrenzt.

2. Dosieivarrichtung nach Anspruch 1, **gekennzeiehnet durch** eine Verschlußvorrichtung (60) mit einem ersten Sperrmittel (62) zum Verschließen des Anspritzkanals und einem zweiten Sperrmittel (64) zum Verschließen des Verbindungskanals (30), wobei die Verschlußvorrichtung zwischen einer Dosierstellung, in der der Anspritzkanal (70) durch das erste Sperrmittel verschlossen ist und der Verbindungskanal (30) geöffnet ist, und einer Einspritzstelhung in der der Verbindungskanal durch das zweite Sperrmittel (64) verschlossen ist und der Anspritzkanal (10) geöffnet ist, bewegbar ist.

3. Dosiervorrichtung nach Anspruch 2, **dadurch gekennzeichnet, daß** die Verschlußvorrichtung in eine Nachdruckstellung bewegbar ist, in der der Verbindungskanal und der Anspritzkanal geöffnet sind.

4. Dosiervorrichtung nach einem der Ansprüche 1 bis 3 mit einem verstellbaren Anschlag (74) für das Verdrängungselement (50).

5. Spritzgießeinheit mit einer Dosiervorrichtung nach einem der Ansprüche 1 bis 4.

6. Formwerkzeug zur Herstellung von Kunststoffartikeln mit mindestens einer Dosiervorrichtung nach einem der Ansprüche 1 bis 4.

7. Formwerkzeug nach Anspruch 6, mit mehreren Formkavitäten, wobei jeder Formkavität eine eigene Dosiervorrichtung zugeordnet ist.

## Claims

1. A dosing device for an injection moulding device comprising a pre-chamber (20) which is connected to an ingate (10), and a dosing chamber (40) which is connected to an injection channel (70), wherein the pre-chamber (20) and the dosing chamber (40) are interconnected by means of a connecting channel (30) which can be closed, wherein a movable displacement element (50) in the form of a piston, which separates the two chambers from one another, is provided between the pre-chamber (20) and the dosing chamber (40), **characterised in that** the piston surface (A1) which defines the pre-chamber (20) is smaller than the piston surface (A2) which defines the dosing chamber (40).

2. The dosing device according to claim 1, **characterised by** a closure device (60) comprising a first closing means (62) for closing the injection channel and a second closing means (64) for closing the connecting channel (30), wherein the closure device can be moved between a dosing position wherein the injection channel (70) is closed by the first closing means and the connecting channel (30) is open and an injection position wherein the connecting channel is closed by the second closing means (64) and the ingate (70) is opened.

3. The dosing device according to claim 2, **characterised in that** the closure device can be moved into an after-pressure position wherein the connecting channel and the injection channel are open.

4. The dosing device according to any one of claims 1 to 3 with an adjustable stop (74) for the displacement element (50).

5. An injection moulding unit with a dosing device according to any one of claims 1 to 4.

6. A moulding tool for manufacturing plastic articles comprising at least one dosing device according to one of claims 1 to 4.

7. A moulding tool according to claim 6, comprising a plurality of mould cavities wherein each mould cavity has its own dosing device.

## Revendications

1. Dispositif de dosage pour unité de moulage par injection comportant une pré-cellule (20) qui est reliée à un canal d'alimentation (10) et une cellule de dosage (40) qui est reliée à un canal d'injection (70), la pré-cellule (20) et la cellule de dosage (40) étant reliées entre elles au moyen d'un canal de liaison pouvant être barré (30), dans lequel il est prévu, entre la pré-cellule (20) et la cellule de dosage (40), un élément de refoulement (50) obturable et séparant les deux cellules l'une de l'autre, sous forme d'un piston, **caractérisé en ce que** la surface du piston (A1) limitant la pré-cellule (20) est inférieure à la surface du piston (A2) limitant la cellule de dosage (40).

2. Dispositif de dosage selon la revendication 1, **caractérisé par** un dispositif de fermeture (60) comprenant un premier moyen de barrage (62) servant à obturer le canal d'injection et un deuxième moyen de barrage (64) servant à obturer le canal de liaison (30), le dispositif de fermeture étant mobile entre une position de dosage, où le canal d'injection (70) est fermé par le premier moyen de barrage et le canal de liaison (30) est ouvert, et une position d'injection, où le canal de liaison est fermé par le deuxième moyen de barrage (64) et le canal d'injection (70) est ouvert.

3. Dispositif de dosage selon la revendication 2, **caractérisé en ce que** le dispositif de fermeture est mobile vers une position de post-pression où le canal de liaison et le canal d'injection sont ouverts.

4. Dispositif de dosage selon une des revendications 1 à 3, comprenant une butée réglable (74) pour l'élément de refoulement (50).

5. Unité de moulage par injection comportant un dispositif de dosage selon une des revendications 1 à 4.

6. Outillage de moulage pour la fabrication d'articles en matière plastique, comportant au moins un dispositif de dosage selon une des revendications 1 à 4.

7. Outillage de moulage selon la revendication 6, comportant plusieurs cavités de moule, un dispositif de dosage propre étant associé à chaque cavité de moule.
